## Europäisches Patentamt
## European Patent Office
## Office européen des brevets

(19)

(11) Veröffentlichungsnummer : **0 165 582**
**B1**

(12)

# EUROPÄISCHE PATENTSCHRIFT

(45) Veröffentlichungstag der Patentschrift :
· 17.05.89

(51) Int. Cl.⁴ : **C 03 B 37/14**, G 02 B 6/42,
G 02 B 6/26

(21) Anmeldenummer : 85107482.3

(22) Anmeldetag : 18.06.85

(54) Verfahren zur Herstellung eines blanken·Fasertapers an einer metallisierten Faser.

(30) Priorität : 20.06.84 DE 3422893

(43) Veröffentlichungstag der Anmeldung :
27.12.85 Patentblatt 85/52

(45) Bekanntmachung des Hinweises auf die Patenterteilung : 17.05.89 Patentblatt 89/20

(84) Benannte Vertragsstaaten :
DE FR GB

(56) Entgegenhaltungen :
EP–A– 0 076 575
US–A– 4 336 047
, ELECTRONICS LETTERS, Band 19, Nr. 6, März 1983,
Seiten 205-207, London, GB; G.D. KHOE et al.: "Efficient coupling of laser diodes to tapered monomode
fibres with high-index end"
PATENT ABSTRACTS OF JAPAN, Band 5, Nr. 115 (P-
72)[787], 24. Juli 1981; & JP - A - 56 57017 (FUJITSU
K.K.) 19.03.1981

(73) Patentinhaber : Siemens Aktiengesellschaft Berlin
und München
Wittelsbacherplatz 2
D-8000 München 2 (DE)

(72) Erfinder : Mathyssek, Konrad, Dr.
Herzog-Tassilo-Ring 28
D-8021 Zorneding (DE)
Erfinder : Smola, Jan
Kemptener Strasse 35
D-8000 München 71 (DE)

## Beschreibung

Die vorliegende Erfindung betrifft ein Verfahren zur Herstellung eines blanken Fasertapers, insbesondere mit angeschmolzener Linse, an einer metallisierten Faser.

Für den Aufbau von Sendemoduln mit einer Anschlußfaser in Form einer Monomodefaser kann die notwendige Ankoppeloptik durch gezogene Fasertaper mit angeschmolzener Linse realisiert werden. Bei der Faserfixierung wird derzeit das Löten bevorzugt angewandt. Zu diesem Zweck bedarf es metallisierter Fasern, aus welchen die genannte Ankoppeloptik erzeugt werden soll. Die Metallisierung darf jedoch nicht den Bereich des Tapers selbst bedecken, soll aber auch nur unmittelbar in seinem Bereich entfernt werden.

Derzeit wird dazu von einer blanken, d. h. nichtmetallisierten Faser ausgegangen. Nach Herstellung des Tapers an der blanken Faser wird dieser zusammen mit der angrenzenden blanken Faser vollständig metallisiert. Die Entfernung der Metallisierung im Bereich des Tapers kann durch Löten bzw. Ablegieren oder aufwendige fotochemische Verfahren durchgeführt werden.

Aufgabe der vorliegenden Erfindung ist es, ein Verfahren der eingangs genannten Art anzugeben, bei dem ein zusätzlicher prozeßtechnischer Aufwand für die Entfernung der Metallisierung nicht nötig ist.

Diese Aufgabe wird durch die im Patentanspruch 1 angegebenen Merkmale gelöst.

Bei dem erfindungsgemäßen Verfahren wird die Entfernung der Metallisierung im Bereich des Tapers bei der Herstellung des Tapers selbst mitgeliefert.

Das lokale Entfernen der Metallisierung auf der Faser beruht darauf, daß es beim Zünden des Lichtbogens zu flammenähnlichem Entzünden und Verdampfen der Metallschicht auf der Faser kommt, die in einem längsaxialen Bereich der Faser vollständig verdampfen kann, derart, daß sich in diesem Bereich kein Metall mehr auf der Faser befindet, die optische Qualität der Faser in diesem Bereich jedoch nicht beeinträchtigt wird.

Vorteilhafterweise wird gemäß Anspruch 2 eine durch Sputtern oder Bedampfen metallisierte Faser erweicht und gezogen.

Die gesamte Schichtdicke der Metallisierung sollte dabei gemäß Anspruch 3 in der Größenordnung von 1 μm liegen.

Spezielle Fasermetallisierungen und Fasern, die sich in der Praxis gut für das erfindungsgemäße Verfahren eignen und die auch in anderer Hinsicht, beispielsweise hinsichtlich ihrer Haftfestigkeit an der Faser und ihrer Lotfähigkeit günstige Eigenschaften aufweisen, sind in den Ansprüchen 4 bis 9 angegeben.

Bevorzugterweise wird gemäß Anspruch 10 die metallisierte Faser im Wechselstromlichtbogen erweicht.

Aus Gründen der mechanischen Stabilität des Tapers (Mikrofonie-Effekt) soll die Abbrennlänge, d. h. der Abstand zwischen der Linse bzw. dem freien Ende des blanken Tapers bis zur unbeschädigten lötfähigen Metallisierung der Faser möglichst klein sein, insbesondere kleiner als 1 mm. Es wurde gefunden, daß die Abbrennlänge weder vom Entladestrom noch von der Art der Metallschicht auf der Faser abhängt, sondern nur durch den Abstand zwischen den Elektroden beeinflußt werden kann, zwischen denen der Lichtbogen erzeugt wird. Mit kleiner werdendem Abstand zwischen den Elektroden wird die Abbrennlänge kleiner, weil die räumliche Ausdehnung des Lichtbogens mit diesem Abstand abnimmt. Demgemäß ist es vorteilhaft und zweckmäßig, das erfindungsgemäße Verfahren nach der Vorschrift des Anspruchs 11 durchzuführen.

Für die Erzeugung einer vorgegebenen Abbrennlänge von höchstens 1 mm ist gemäß Anspruch 12 der Abstand zwischen den Elektroden von höchstens 1,65 mm einzuhalten.

Zweckmäßigerweise wird gemäß Anspruch 13 der Abstand zwischen den Elektroden höchstens 1,3 mm gewählt. Bei diesem Abstand läßt sich die Abbrennlänge von 1 mm leicht einhalten.

Bei einer praktischen Durchführung des erfindungsgemäßen Verfahrens hat es sich als brauchbar erwiesen, wenn die Faser mit einer Ziehgeschwindigkeit gezogen wird, die gemäß Anspruch 14 etwa 0,04 mm/s beträgt.

Zum Anschmelzen der Linse an den Taper kann das Verfahren gemäß Anspruch 15 oder aber das Verfahren nach Anspruch 17 verwendet werden, bei dem der blanke Taper mit angeschmolzener Linse in einem Arbeitsgang hergestellt werden kann. Ein derartiges Verfahren ist in Zusammenhang mit der Erzeugung eines Tapers mit Linse an einer blanken Faser bereits in der älteren deutschen Patentanmeldung 34 07 820.7, offengelegt am 07.11.85 und daher nicht zum Stand der Technik gehörend, vorgeschlagen worden.

Bei dem Verfahren nach Anspruch 15 wird die Durchtrennung in der Einschnürung bevorzugterweise so vorgenommen, wie es im Anspruch 16 angegeben ist.

Ein Ausführungsbeispiel der Erfindung wird anhand der Figuren in der folgenden Beschreibung näher erläutert. Von den Figuren zeigen :

Figur 1   eine Ziehvorrichtung zur Herstellung von Tapern Fasern, wie sie in der älteren europäischen Patentanmeldung EP-A1-0137312, veröffentlicht am 17.04.85 und daher fallend unter Artikel 54 (3) EPÜ, vorgeschlagen worden ist und die auch für das hier beschriebene Verfahren vorteilhaft angewendet wird,

Figur 2   eine mit der Vorrichtung nach Figur 1 hergestellte und in dieser Figur vergrößert herausgestellte blanke Einschnürung in einer metallisierten Faser in nochmals vergrößerter und deutlicherer Darstellung in Seitenansicht, und

Figur 3   einen aus der Einschnürung nach Figur 2 hergestellten blanken Taper mit Linse.

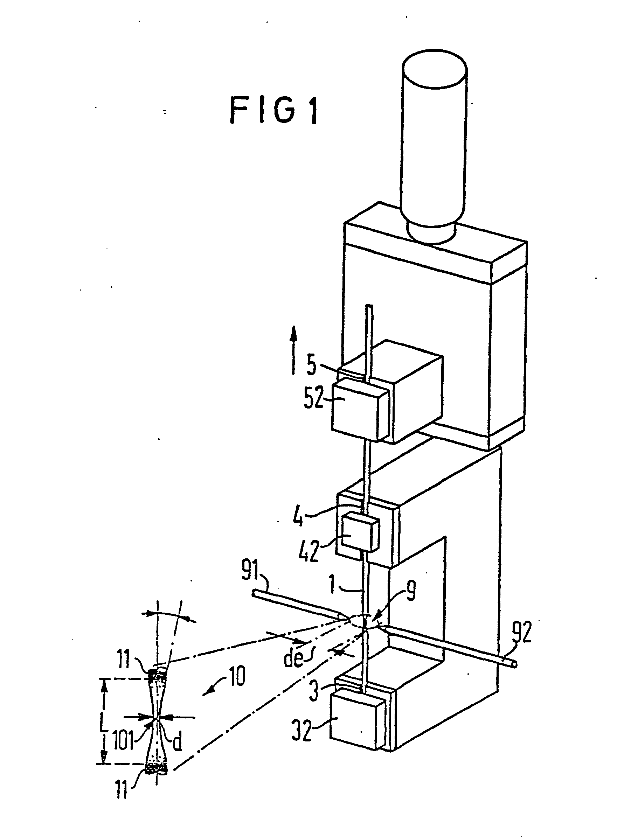

Die Vorrichtung nach Figur 1 besteht im wesentlichen aus zwei im Abstand $d_e$ voneinander angeordneten Elektroden 91 und 92 und aus drei fluchtenden Führungsnuten 3, 4 und 5, in welche die metallisierte Faser 1, beispielsweise eine metallisierte Monomodefaser, eingelegt und beispielsweise mit Magneten 32, 42 und 52 fixiert wird. Die Kräfte des Magneten 32 und der unteren Nut 3 des Magneten 52 und der oberen Nut 5 sind so gewählt, daß während des Ziehens die Befestigung der Faser 1 in der oberen Nut 5 wie eine Rutschkupplung wirkt. Wird ein nicht dargestellter Zugmotor eingeschaltet, der die obere Nut 5 und die beiden relativ zueinander fixierten anderen Nuten 4 und 3 in längsaxialer Richtung der Nuten auseinanderbewegt, so ist die Kraft des Magneten 52 zu gering, um die Faser 1 klemmend festzuhalten und die eingelegte Faser 1 rutscht durch.

Die mittlere Nut 4, die zur unteren Nut 3 sehr genau fluchten muß, dient ausschließlich als Führung. Ein schwacher Magnet 42 auf dieser Nut 4 mit im Vergleich zu den Magneten 32 und 52 geringer Kraft, dient lediglich dazu, die Faser 1 in der Nut 4 zu halten.

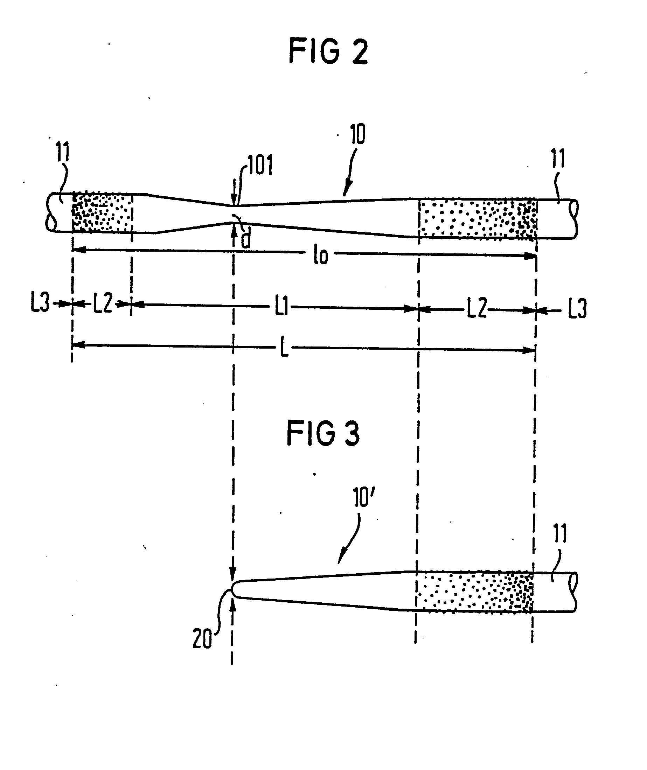

Wird der Wechselstromlichtbogen 9 eingeschaltet, der sich zwischen den Elektroden 91 und 92 ausbildet, so wird die in ihm angeordnete Faser 1 lokal sehr rasch bis zum Erweichungspunkt des Fasermaterials erhitzt. Die Kraft des obersten Magneten 52 reicht dann aus, um die Faser 1 wieder in der Nut 5 festzuklemmen, und es kommt zur Ausbildung einer blanken Einschnürung 10 im erweichten Abschnitt der Faser 1 im Wechselstromlichtbogen 9, wie sie in der Figur 1 vergrößert herausgestellt und in der Figur 2 detaillierter dargestellt ist.

Der maximale Steigungswinkel $\alpha$ der im Wechselstromlichtbogen 9 sich ausbildenden blanken Einschnürung 10 und der Durchmesser d in deren Taille 101 lassen sich durch die Wahl einiger Betriebsparameter einstellen. Zu diesen gehören : der Entladungsstrom und die Einschaltdauer des Lichtbogens 9, der Abstand $d_e$ zwischen den Elektroden 91 und 92 und die Ziehgeschwindigkeit, mit der die erweichte Faser auseinandergezogen wird bzw. die obere Nut 5 und die relativ zueinander fixierten Nuten 3 und 4 auseinanderbewegt werden. Versuche haben gezeigt, daß sich der maximale Steigungswinkel $\alpha$ der blanken Einschnürung 10 nur über den Abstand $d_e$ zwischen den Elektroden 91 und 92 beeinflussen läßt. Die Abhängigkeit des maximalen Steigungswinkels $\alpha$ der Einschnürung als Funktion des Abstandes $d_e$ zwischen den Elektroden 91 und 92 gilt sowohl für blanke Einschnürungen 10 in metallisierten Fasern 1 als auch für Einschnürungen in nichtmetallisierten Fasern. Der maximale Steigungswinkel $\alpha$ der Einschnürung läßt sich durch die Breite der Schmelzzone im Lichtbogen 9, die über den Abstand $d_e$ zwischen den Elektroden 91 und 92 variiert werden kann, beeinflussen. Der Durchmesser d der Taille der Einschnürung hängt von der Brenndauer des Lichtbogens 9 und der Ziehgeschwindigkeit ab. Diese qualitativen Abhängigkeiten gelten beim Ziehen sowohl von blanken Einschnürungen 10 in metallisierten Fasern 1 als auch von Einschnürungen in nichtmetallisierten Fasern.

Bei der Herstellung von blanken Einschnürungen in metallisierten Fasern 1 treten jedoch einige Besonderheiten auf. Ist die in die V-Nuten 3 bis 5 eingelegte Faser 1 eine metallisierte Faser, beispielsweise eine Monomodefaser aus Quarzglas, auf deren blanke polierte Oberfläche zunächst eine 30-100 nm dicke Titanschicht und dann eine 250-450 nm dicke Palladiumschicht durch Sputtern und anschliessend eine 100-500 nm dicke Goldschicht durch Bedampfen aufgebracht worden ist, so kommt es beim Zünden des Lichtbogens 9 zu flammenähnlichem Entzünden und Verdampfen der schichtförmigen Metallisierung 11 auf der Faser 1. Die Metallisierung 11 der Faser 1 wird hierdurch innerhalb eines bestimmten Bereichs L in längsaxialer Richtung der Faser 1 beschädigt und damit lötunfähig. Es bilden sich drei zu unterscheidende Bereiche L1 bis L3 aus, die in Figur 2 angedeutet sind. Im Bereich L1, in dem die Einschnürung ausgebildet ist, befindet sich nach dem Ziehvorgang praktisch kein Metall auf der Faser 1. Die ursprüngliche Metallisierung 11 ist durch den zündenden Lichtbogen verdampft worden. Zwar kann die Oberfläche der blanken Faser 1 im Bereich L1 gegenüber der Oberfläche eines aus einer nichtmetallisierten Faser gezogenen Tapers eine schlechtere Qualität aufweisen, jedoch werden dadurch keine zusätzlichen optischen Verluste bedingt.

In dem an den Bereich L1 beidseitig angrenzenden Bereich L2 ist die Metallisierung über einer bestimmten Länge aufgeschmolzen und es kann u. a. zur Bildung von zahlreichen Kügelchen kommen, die sich mechanisch leicht entfernen lassen. Die Entfernung dieser bei der beispielhaften metallisierten Monomodefaser 1 aus einer Metallegierung bestehenden Kügelchen kann bei einer anschließenden Tauchbelotung der metallisierten Faser 1 von selbst geschehen.

An den Bereich L2 schließt sich der Bereich L3 an, in dem die auf die metallisierte Faser 1 aufgebrachte lötfähige, bei der beispielhaften Monomodefaser 1 mehrschichtige Metallisierung 11 umbeschädigt ist.

Wegen der guten Wärmeleitfähigkeit der Metallisierung 11 ergibt sich unter konstanten Betriebsparametern bei metallisierten Fasern 1 ein größerer Durchmesser d der Taille 101 der blanken Einschnürung 10 als bei Einschnürungen aus nichtmetallisierten Fasern. Um gleiche Durchmesser d der Taille 101 bei gleicher Ziehgeschwindigkeit und gleichem Entladestrom des Lichtbogens 9 zu erhalten, muß bei der metallisierten Faser 1 gegenüber der nichtmetallisierten Faser die Ziehdauer verlängert werden.

Aus Gründen der mechanischen Stabilität der Koppelanordnung (Mikrofonie-Effekt) soll die definierte Abbrennlänge $l_0$ möglichst klein, höchstens 1 mm sein. Die definierte Abbrennlänge $l_0$ entspricht der Länge des Bereichs L, also dem Abstand zwischen den unbeschädigten Metallschichten 11 zu beiden Seiten der blanken Ein-

schnürung 10.

Die Abbrennlänge $l_0$ hängt weder vom Entladestrom noch von der Art der Metallschicht ab und kann nur durch den Abstand $d_e$ der Elektroden 91 und 92 beeinflußt werden. Mit kleiner werdendem Abstand $d_e$ wird der Bereich L, in dem die Metallschicht der Faser 1 aufgeschmolzen ist, kleiner, weil die räumliche Ausdehnung des Lichtbogens 9 mit dem Abstand $d_e$ zwischen den Elektroden 91 und 92 abnimmt.

Bei einem Abstand $d_e$ = 1,65 mm erhält man eine Abbrennlänge $l_0$, die um 1 mm herum schwankt. Die Schwankungen der Abbrennlänge $l_0$ sind relativ klein, beispielsweise etwa 50 µm und werden möglicherweise von Unregelmäßigkeiten in der Metallschicht auf der Faser 1 verursacht. Bei einem Abstand $d_e$ von höchstens 1,3 mm erhält man Abbrennlängen $l_0$, die kleiner oder gleich 1 mm sind.

Die Durchtrennung der Einschnürung kann bei nichtmetallisierten Fasern durch ein auf den gewünschten Bereich des Durchmessers der Taille der Einschnürung eingestelltes Fasertrenngerät mit Diamantschneide erfolgen. Die Einschnürung kann dabei mit einer Genauigkeit von ± 20 µm an der gewünschten Stelle getrennt werden.

Es hat sich herausgestellt, daß mit einem Trenngerät gleicher Bauart eine Durchtrennung von blanken Einschnürungen 10 in metallisierten Fasern 1 mit der gleichen Genauigkeit nicht möglich ist. Die blanke Einschnürung 10 bricht vor dem Aufsetzen der Diamantschneide unter der Biegebelastung vorzugsweise in der Taille 101 ab, da die Steifigkeit der metallisierten Fasern 1 größer ist, als die der nichtmetallisierten. Stärkere Verbiegung der Faser in der blanken Taille 101 führt daher zum vorzeitigen Bruch an dieser Stelle.

Beim Bruch ergeben sich glatte Bruchflächen von guter Qualität, die am Rande keine besonderen Unregelmäßigkeiten, wie beispielsweise Aussprünge aufweisen und an denen eine Linse angeschmolzen werden kann.

Zum Durchtrennen der blanken Einschnürung 10 in der metallisierten Faser 1 kann aber auch so vorgegangen werden, daß nach Ausbildung dieser Einschnürung 10 die auf die Faser 1 einwirkende Zugkraft fortgenommen wird, die blanke Einschnürung 10 aber im Lichtbogen 9 so lange belassen wird, bis sich die Faser 1 in der blanken Einschnürung 10 von selbst durchtrennt und sich am freien Ende eines dabei entstehenden sich verjüngenden blanken Endstücks 10', das als blanker Fasertaper verwendet wird, eine Linse 20 ausgebildet hat. Diese Art der Durchtrennung ist genauer als die Durchtrennung mittels Bruch und hat den Vorteil, daß der blanke Fasertaper mit angeschmolzener Linse in einem Arbeitsgang hergestellt werden kann.

Es hat sich gezeigt, daß sich bei gleichem Abstand $d_e$ zwischen den Elektroden 91 und 92 und bei gleicher Ziehgeschwindigkeit sich der gleiche maximale Steigungswinkel $\alpha$ ausbildet, unabhängig davon, ob die verwendete Faser metallisiert oder nichtmetallisiert ist. Bei einem Abstand $d_e$ = 1,3 mm zwischen den Elektroden 91,92 und einer Ziehgeschwindigkeit von 0,04 mm/s beträgt der maximale Steigungswinkel $\alpha$ = 15° ± 1°.

Messungen des Koppelwirkungsgrades an blanken Fasertapern, die aus metallisierten und aus nichtmetallisierten Fasern hergestellt wurden, haben gezeigt, daß bei gleichem Krümmungsradius der Linse am Taper im Bereich der Meßgenauigkeit keine Unterschiede im Koppelwirkungsgrad auftreten.

Die oben beispielhaft angegebene mehrschichtige Metallisierung aus der 30-100 nm dicken Titanschicht, der 250-450 nm dicken Palladiumschicht und der 100-500 nm dicken Goldschicht auf der Monomodefaser hat sich hinsichtlich ihrer Haftfähigkeit an der Faser und ihrer Lötfähigkeit als günstig erwiesen.

## Patentansprüche

1. Verfahren zur Herstellung eines blanken Fasertapers an einer metallisierten Faser, beinhaltend das Erweichen und Ziehen einer metallisierten Faser (1) im Lichtbogen (9), wobei sich die erweichte metallisierten Faser (1) einschnürt und in der entstehenden Einschnürung (10) die metallisierte Faser (1) infolge der Einwirkung des Lichtbogens (9) über dem ganzen Umfang von der Metalli sierung (11) befreit und damit blank wird, wobei nach einer Durchtrennung die derart erzeugte blanke Einschnürung (10) und ein dabei entstehendes sich verjüngendes blankes Endstück (10') an einer metallisierten Faser als blanker Fasertaper verwendbar ist.

2. Verfahren nach Anspruch 1, wobei eine durch Sputtern oder Bedampfen metallisierte Faser (1) erweicht und gezogen wird.

3. Verfahren nach Anspruch 1 oder 2, wobei die Schichtdicke der Metallisierung (11) insgesamt in der Größenordnung von 1 µm liegt.

4. Verfahren nach einem der vorhergehenden Ansprüche, wobei eine schichtweise durch Sputtern und/oder Bedampfen mit verschiedenen Metallen schichtweise metallisierte Faser (1) verwendet wird.

5. Verfahren nach Anspruch 4, wobei eine zuerst mit einer Titanschicht, dann mit einer Palladiumschicht und dann mit einer Goldschicht metallisierte Faser (1) verwendet wird.

6. Verfahren nach Anspruch 5, wobei eine metallisierte Faser (1) verwendet wird, bei der die Titan- und Palladiumschicht durch Sputtern und die Goldschicht durch Bedampfen auf die Faser (1) aufgebracht worden ist.

7. Verfahren nach Anspruch 5 oder 6, wobei eine metallisierte Faser (1) verwendet wird, bei der die Dicke der Titanschicht etwa 30-100 nm, die Dicke der Palladiumschicht etwa 250-450 nm und die Dicke der Goldschicht etwa 100-500 nm beträgt.

8. Verfahren nach einem der vorhergehenden Ansprüche, wobei eine metallisierte Faser (1) aus Quarzglas verwendet wird.

9. Verfahren nach einem der vorhergehenden Ansprüche, wobei eine metallisierte Faser (1) verwendet wird, bei der die Metallisierung (11) auf eine polierte Oberfläche der blanken Faser aufgebracht worden ist.

10. Verfahren nach einem der vorhergehenden Ansprüche, wobei die metallisierte Faser (1) im Wechselstromlichtbogen (9) erweicht wird.

11. Verfahren nach einem der vorhergehenden Ansprüche, wobei Elektroden (91, 92), zwischen denen ein Lichtbogen (9) erzeugt wird, in welchem die metallisierte Faser (1) erweicht wird, in einem Abstand ($d_e$) voneinander angeordnet werden, bei dem höchstens eine vorgegebene definierte Abbrennlänge ($l_0$) der Metallisierung (11) auf der metallisierten Faser (1) erreicht wird.

12. Verfahren nach Anspruch 11, wobei bei einer vorgegebenen definierten Abbrennlänge ($l_0$) von höchstens etwa 1 mm ein definierten Abstand ($d_e$) von höchstens 1.65 mm. zwischen den Elektroden (91, 92) eingehalten wird.

13. Verfahren nach Anspruch 12, wobei ein Abstand ($d_e$) von höchstens 1,3 mm zwischen den Elektroden (91, 92) eingehalten wird.

14. Verfahren nach einem der vorhergehenden Ansprüche, wobei die metallisierte Faser (1) während des Einwirkenlassens des Lichtbogens (9) mit einer Ziehgeschwindigkeit von etwa 0,04 mm/s gezogen wird.

15. Verfahren nach einem der vorhergehenden Ansprüche, wobei nach Ausbildung der blanken Einschnürung (10) in der metallisierten Faser (1) der Lichtbogen (9) abgeschaltet, die metallisierte Faser (1) in der blanken Einschnürung (10) durchtrennt und an das freie Ende eines dabei entstehenden sich verjüngenden blanken Endstücks (10') das als blanker Fasertaper verwendet wird, eine Linse (20) angeschmolzen wird.

16. Verfahren nach Anspruch 15, wobei die Durchtrennung durch Verbiegen der metallisierten Faser (1) bis zum Bruch in der blanken Einschnürung (10) vorgenommen wird.

17. Verfahren nach einem der Ansprüche 1 bis 16, wobei nach Ausbildung der blanken Einschnürung (10) in der metallisierten Faser (1) die auf die Faser einwirkende Zugkraft fortgenommen wird, die blanke Einschnürung (10) aber weiter im Lichtbogen (9) solange belassen wird, bis sich die metallisierte Faser (1) in der blanken Einschnürung (10) von selbst durchtrennt und sich am freien Ende eines dabei entstehenden sich verfüngenden blanken Endstücks (10'), das als Fasertaper verwendet wird, eine Linse (29) ausgebildet hat.

**Claims**

1. Method of producing a bare taper on a metalized fibre, comprising the softening and drawing of a metallized fibre (1) in an arc (9), in which method the softened metallized fibre (1) becomes constricted and, in the constriction (10) produced, the metallized fibre (1) is freed of the metallization (11), and is thus bared, over the entire circumference due to the action of the arc (9), and in which method, after a severing, the bare constriction (10) produced in this way and a tapering bare end piece (10') thereby produced on a metallized fibre can be used as bare fibre taper.

2. Method according to Claim 1, in which a fibre (1) metallized by sputtering or vapour deposition is softened and drawn.

3. Method according to Claim 1 or 2, in which the layer thickness of the metallization (11) altogether is of the order of 1 $\mu$m.

4. Method according to one of the preceding claims, in which a fibre (1) metallized layer by layer with various metals by sputtering and/or vapour deposition layer by layer is used.

5. Method according to Claim 4, in which a fibre (1) metallized firstly with a titanium layer, then with a palladium layer and then with a gold layer is used.

6. Method according to Claim 5, in which a metallized fibre (1) is used on which the titanium and palladium layers have been applied to the fibre (1) by sputtering and the gold layer has been applied by vapour deposition.

7. Method according to Claim 5 or 6, in which a metallized fibre (1) is used on which the thickness of the titanium layer is approximately 30-100 nm, the thickness of the palladium layer is approximately 250-450 nm and the thickness of the gold layer is approximately 100-500 nm.

8. Method according to one of the preceding claims, in which a metallized fibre (1) of quartz glass is used.

9. Method according to one of the preceding claims, in which a metallized fibre (1) is used on which the metallization (11) has been applied to a polished surface of the bare fibre.

10. Method according to one of the preceding claims, in which the metallized fibre (1) is softened in an alternating-current arc (9).

11. Method according to one of the preceding claims, in which electrodes (91, 92), between which an arc (9) in which the metallized fibre (1) is softened is generated, are arranged at a distance ($d_e$) from each other such that at most a given defined arcing length ($l_0$) of the metallization (11) on the metallized fibre (1) is achieved.

12. Method according to Claim 11, in which, with a given defined arcing length ($l_0$) of at most approximately 1 mm, a defined distance ($d_e$) of at most 1.65 mm between the electrodes (91, 92) is maintained.

13. Method according to Claim 12, in which a distance ($d_e$) of at most 1.3 mm between the electrodes (91, 92) is maintained.

14. Method according to one of the preceding claims, in which the metallized fibre (1) is drawn at a drawing rate of approximately 0.04 mm/s while the arc (9) is allowed to act.

15. Method according to one of the preceding claims, in which, after forming of the bare constriction (10) in the metallized fibre (1), the arc (9) is switched off, the metallized fibre (1) is severed in the bare constriction (10) and a lens (20) is fused onto the free end of a tapering bare end piece (10') thereby produced, which is used as bare fibre taper.

16. Method according to Claim 15, in which the severing is performed by bending of the metallized fibre (1) until rupture in the bare constriction (10).

17. Method according to one of Claims 1 to 16, in which, after forming of the bare constriction (10) in the metallized fibre (1), the tensile force acting on the fibre is removed, but the bare constriction (10) is left in the arc (9) until the metallized fibre (1) severs of its own accord in the bare constriction (10) and a lens (29) has formed on the free end of a tapering bare end piece (10') thereby produced, which is used as fibre taper.

## Revendications

1. Procédé pour fabriquer un cône dénudé sur l'extrémité d'une fibre métallisée, comprenant le ramollissement et l'étirage d'une fibre métallisée (1) dans un arc électrique (9), avec rétrécissement de la fibre (1) ramollie, la fibre (1) étant débarrassée sur tout son pourtour de la métallisation (11), dans le rétrécissement (10) créé, par suite de l'action de l'arc (9), et devenant donc nue, le sectionnement consécutif du rétrécissement dénudé (10), ainsi produit, procurant un tronçon terminal dénudé (10') qui s'amincit sur une fibre métallisée, tronçon terminal qui est utilisable comme un cône de fibre nu.

2. Procédé selon la revendication 1, dans lequel on ramollit et on étire une fibre (1) métallisée par pulvérisation cathodique ou par vaporisation.

3. Procédé selon la revendication 1 ou 2, dans lequel l'épaisseur totale de la couche formée par la métallisation (11) est de l'ordre de 1 μm.

4. Procédé selon une des revendications précédentes, selon lequel on utilise une fibre (1) métallisée en plusieurs couches par pulvérisation cathodique et/ou vaporisation avec différents métaux.

5. Procédé selon la revendication 4, dans lequel on utilise une fibre (1) métallisée d'abord par une couche de titane, ensuite par une couche de palladium puis par une couche d'or.

6. Procédé selon la revendication 5, dans lequel on utilise une fibre métallisée (1) sur laquelle les couches de titane et de palladium ont été appliquées par pulvérisation cathodique et sur laquelle la couche d'or a été appliquée par vaporisation.

7. Procédé selon la revendication 5 ou 6, dans lequel on utilise une fibre métallisée (1) sur laquelle l'épaisseur de la couche de titane est d'environ 30-100 nm, l'épaisseur de la couche de palladium est d'environ 250-450 nm et l'épaisseur de la couche d'or est d'environ 100-500 nm.

8. Procédé selon une des revendications précédentes, dans lequel on utilise une fibre métallisée (1) en verre de quartz.

9. Procédé selon une des revendications précédentes, dans lequel on utilise une fibre (1) dont la métallisation (11) a été appliquée sur une surface polie de la fibre nue.

10. Procédé selon une des revendications précédentes, dans lequel on ramollit la fibre métallisée (1) dans un arc à courant alternatif (9).

11. Procédé selon une des revendications précédentes, dans lequel l'arc électrique (9), dans lequel on ramollit la fibre métallisée (1), est établi entre des électrodes (91, 92) ayant un écartement ($d_e$) qui est tel que la métallisation (11) sur la fibre (1) est brûlée tout au plus sur une longueur ($l_0$) définie, prédéterminée.

12. Procédé selon la revendication 11, dans lequel, pour une longueur de brûlage ($l_0$) définie correspondant tout au plus à environ 1 mm, on maintient un écartement ($d_e$) défini de tout au plus 1,65 mm entre les électrodes (91, 92).

13. Procédé selon la revendication 12, dans lequel on maintient un écartement ($d_e$) de tout au plus 1,3 mm entre les électrodes (91, 92).

14. Procédé selon une des revendications précédentes, dans lequel on étire la fibre métallisée (1), pendant qu'on laisse agir l'arc électrique (9), avec une vitesse d'étirage d'environ 0,04 mm/s.

15. Procédé selon une des revendications précédentes, selon lequel, à la suite de la formation du rétrécissement dénudé (10) dans la fibre métallisée (1), on coupe l'arc (9), on sectionne la fibre (1) dans le rétrécissement dénudé (10) et on forme par fusion une lentille (20) à l'extrémité libre du tronçon terminal (10') dénudé et s'amincissant, tronçon qui résulte du sectionnement et que l'on utilise comme cône de fibre dénudé.

16. Procédé selon la revendication 15, dans lequel on opère le sectionnement par fléchissement de la fibre (1) jusqu'à sa rupture dans le rétrécissement dénudé (10).

17. Procédé selon une des revendications 1 à 16, dans lequel, après la formation du rétrécissement dénudé (10) dans la fibre métallisée (1), on supprime l'effort de traction agissant sur la fibre, mais on laisse le rétrécissement dénudé (10) dans l'arc (9) jusqu'à ce que la fibre se coupe d'elle-même dans le rétrécissement dénudé (10) et qu'une lentille (20) se soit formée à l'extrémité libre du tronçon terminal (10') dénudé et s'amincissant, tronçon qui résulte de cette coupure et qui est utilisé comme cône de fibre.

FIG 1

# FIG 2

# FIG 3